# EUROPEAN PATENT SPECIFICATION

(11) **EP 0 508 091 B1**
(45) Date of publication and mention of the grant of the patent: **09.08.1995**
(21) Application number: 92103502.8
(22) Date of filing: 29.02.1992
(51) Int. Cl.: B60C 11/01, B60C 13/02

(54) **A tire with improved venting**
Luftreifen mit verbesserter Entgasung
Bandage pneumatique permettant un meilleur dégazage

(30) Priority: 08.03.1991 US 666328
(43) Date of publication of application: 14.10.1992
(73) Proprietor: THE GOODYEAR TIRE & RUBBER COMPANY, Akron, Ohio 44316-0001 (US)
(72) Inventor: Attinello, John Steven, Hartville, Ohio 44632 (US); Landers, Samuel Patrick, Uniontown, Ohio 44685 (US); Glover, William Eugene, Akron, Ohio 44312 (US)
(74) Representative: Leitz, Paul

(56) References cited:
- DE-B- 1 028 448
- DE-C- 696 302
- US-A- 3 818 965
- US-A- 4 700 762
- PATENT ABSTRACTS OF JAPAN vol. 12, no. 381 (M-752)(3228) 12 October 1988 & JP-A-63 134 207 (BRIDGESTONE CORP.) 6 June 1988

## Description

### Background of the Invention

The invention relates to a pneumatic tire in which the tread design and the sidewall design are integrated.

This application is somewhat related to applications EP-A-503407, EP-A-503406, EP-A-503405, EP-A-503 404 and EP-A-508090 filed on even date herewith.

In the building of a tire, the material used to make the tread and the materials used to make the sidewall are different because of the different physical requirements of these two parts of the tire. The tread rubber must be relatively stiff and wear resistant, and provide good traction. The sidewall must be relatively pliable and scuff and puncture resistant. Partially because of their different physical requirements, sidewalls are ordinarily made substantially smooth and the tread is made with a plurality of block traction elements or lugs.

Tread designs where the lugs extend partially into the shoulder portion of the tire are for instance known from DE-C- 696 302 corresponding to the preamble of claim 1 or US-A- 3 818 965.

The most common failure of sidewalls involves cracks in the sidewall rubber caused, for the most part, by the numerous flexes that a tire undergoes during rotation.

When a tire is vulcanized, it is important that gases in the tire be vented or expelled from the tire since trapped gases in the rubber may weaken the rubber and make it more susceptible to cracks, and gases trapped in the plies may lead to delamination.

It is an object of the present invention to provide a sidewall structure or design which reduces propagation of sidewall cracks while providing a means to facilitate venting of the tire gases during vulcanization, while providing a tire design that integrates the design of the sidewall with the design of the tread.

Other objects of the invention will be apparent from the following description and claims.

### Definitions

"Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Crown" refers to the circumferentially outermost portion of the carcass substantially within the width limits of the tread.

"Groove" means an elongated void area in a tread that may extend circumferentially or laterally about the tread in a straight, curved, or zig-zag manner.

"Logarithmic spiral" refers to a spiral that has a gradually expanding arc, as opposed to a substantially constant arc as in for example an Archemedic spiral (i.e. as seen in a phonograph record).

"Lugs" refer to discontinuous radial rows of tread rubber in direct contact with the road surface.

"Net-to-gross" refers to the ratio of the ground contacting surface of a tread to the total tread area.

"Pitch" refers to the distance from one peak in the tread pattern to the next.

"Pitch boundary" refers to a substantially lateral line in the circumference of the tire that defines the beginning or end of the pitch. The pitch boundary may be defined by the center of a lateral groove. A pitch boundary "shift" refers to a circumferential displacement of the line.

"Pneumatic tire" means a laminated mechanical device of generally toroidal shape (usually an open-torus) having beads and a tread and made of rubber, chemicals, fabric and steel or other materials. When mounted on the wheel of a motor vehicle, the tire through its tread provides traction and contains the fluid that sustains the vehicle load.

"Radial" and "radially" are used to mean directions radially toward or away from the axis of rotation of the tire.

"Shoulder" refers to the upper portion of sidewall just below the tread edge.

"Sidewall" means that portion of a tire between the tread and the bead.

"Tread" means a molded rubber component which, when bonded to a tire casing, includes that portion of the tire that comes into contact with the road when the tire is normally inflated and under normal load.

### SUMMARY OF THE INVENTION

A pneumatic tire is provided comprising a pair of annular beads, carcass plies wrapped around the beads, a tread disposed over the carcass plies and sidewalls disposed between the tread and beads, the tire having a pattern created by lateral tread grooves in the shoulder area of the tire which is continued in the sidewall. In the tire, lateral grooves in the tread extend well into the shoulder area in the proximity of the sidewall. The pattern in the sidewall comprises grooves or serrations which originate in the vicinity of the maximum section width of the tire and terminate in the vicinity of the tire shoulder. The sidewall grooves or serrations have an angle that substantially complements or matches the angle of the lateral grooves in the shoulder.

In an illustrated embodiment, a tire is provided having a directional tread in which the lateral grooves have an angle in the shoulder of the tire of about 35°to 90° with respect to a line tangent to the tire, and has grooves or serrations in the sidewall having an angle of 45° to 90° relative to the tangent line.

It is believed that the serrations in the sidewall improve the venting of the tire during vulcanization since the sidewall grooves provide a channel for the escape of venting gases. Since the sidewall grooves substantially match up with the shoulder grooves or lateral grooves of the tread it is believed that venting is substantially less restricted. Also, the ridges of the sidewall make the sidewall more resistant to cracks, and possibly improve the impact resistance of the sidewall.

### BRIEF DESCRIPTION OF THE DRAWINGS

Fig. 1 illustrates a perspective view of an illustrated embodiment of a tire incorporating the inventive concept described herein.

Fig. 2 illustrates the sidewall of the illustrated tire.

Fig. 2A is an enlarged segment of the tire sidewall.

### DETAILED DESCRIPTION OF THE INVENTION

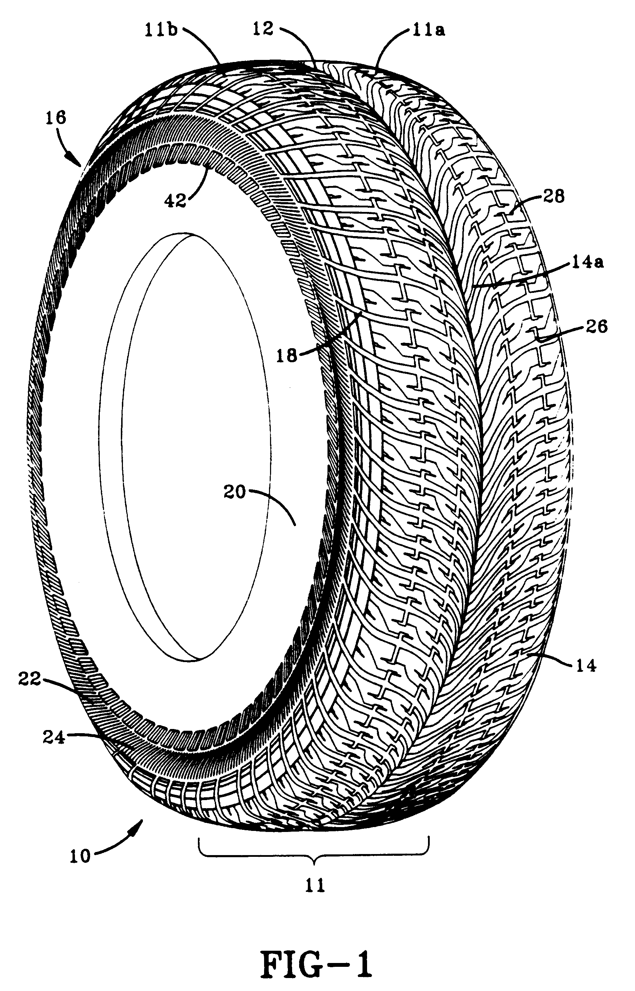

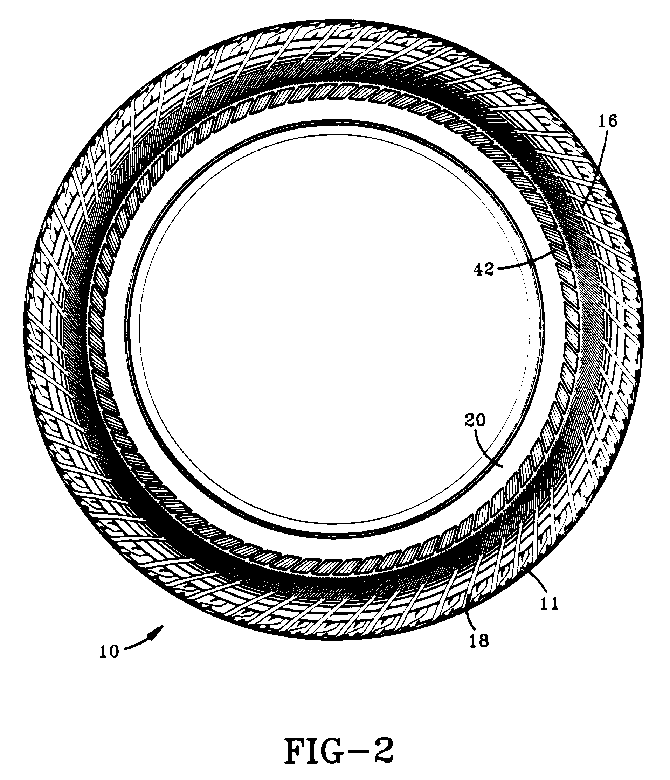

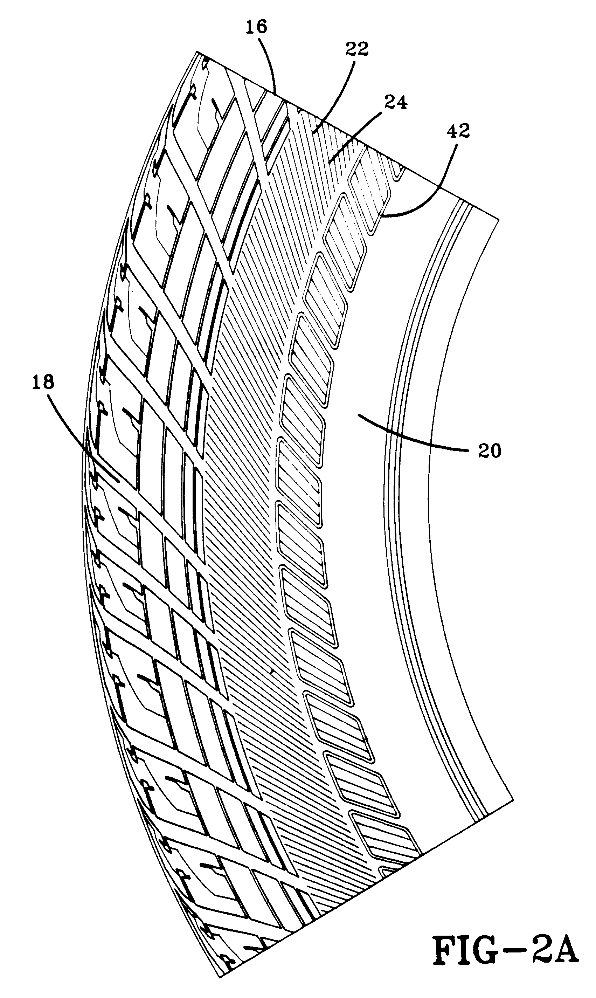

With reference now to Figs. 1, 2 and 2A, tire 10 has a tread 11 which has lateral grooves 14 which extend deep into shoulder 16 at an angle of about 35° to 90°, preferably 50° to 75° with respect to a line tangent to the tire. In a tire having a directional tread, the shoulder grooves may be angled so that the trailing end 18 of the groove (in the shoulder) is the last part of the lateral groove 14 to leave the footprint when the tire is rotated in the forward direction of travel. Sidewall 20 has grooves or serrations 22 that are angled to substantially match the angle of the shoulder grooves. The angle of serrations 22 may be the same as, may be less than, or may be more than the angle of lateral grooves 14. In general, the angle of the sidewall serrations may be 45° to 90°, preferably 50° to 90° with respect to a line tangent to the tire.

Because of manufacturing considerations, in an illustrated embodiment, the angle of the serrations is 90°.

When cracks develop in a tire sidewall, they have a tendency to propagate in a radial direction, following the direction of the reinforcing cords in the carcass ply, or circumferentially because of the circumferential flexing of the tire. The serrations in the sidewall have a tendency to interrupt the crack growth because the ridges of rubber tend to oppose crack growth.

In the illustrated embodiment, tire 10 has a tread portion 11 which is divided into two parts, 11a, 11b by aqua channel 12. Curved lateral grooves 14 initiate in aqua channel 12 and take an uninterrupted arcuate path to shoulder 16. Circumferential grooves 26 intersect lateral grooves 14 forming lugs 28.

When driving in wet conditions, the curvature of the lateral grooves of tire 10 is such that the center or initial portion 14a of a lateral groove is in the leading edge of the footprint initiating the flow of water before the rest of the lateral groove enters the footprint, and as the main portion of the lateral groove enters the footprint, water in lateral groove 14 is expelled through the shoulder area with great force.

Accordingly, the tread of the tire is directional since, if the tire is mounted such that the center portion 14a of the lateral groove enters the footprint last, water would be channeled toward, instead of away from the aqua-channel 12.

In a tire footprint under design load and pressure, the width of the aqua channel is 10%-22%, preferably about 15%, and the overall footprint net to gross is about 50% to 70%, preferably about 55% to 65%. In the illustrated embodiment the footprint net to gross is about 60%. In the contact patch, the part of the tire that touches the road (the footprint excluding the aqua channel) the net to gross is about 60% to 80% preferably 65% to 75%. In the illustrated embodiment the contact patch net to gross is about 70%.

The depth of the aqua channel may comprise 78% to 100%, preferably 82% to 92% of the total tread depth. By total tread depth it is meant the distance from the tread base to the land area of a lug. In the illustrated embodiment the tread depth is about 83% of the total tread depth or about 1,27 mm (0.050 inch) less than the total depth. This depth has been chosen since it insures that the aqua channel will be present throughout the tread life of the tire since the tread wear indicators have a thickness of 1,60 mm (0.063 inch.)

In tire 10, tread portions 11a and 11b are skewed. By skewed it is meant there is a pitch boundary shift between tread portion 11a and tread portion 11b. Because of the pitch boundary shift, the lugs in the two portions of the tire enter into the footprint at different times reducing the amplitudes of the various sound frequencies generated by the tire during its rotation. It is believed that skewing shifts the phase angles of the sound waves generated by the two portions of the tire reducing tire noise by destructive interference and reduction in the amplitudes of the various frequencies at given instants in time. In the illustrated embodiment a 1/2 medium pitch shift is preferred.

The S-shape of the lateral groove extends the lateral groove deep into the shoulder area 16 and causes lateral groove 14 to curve into shoulder 16 at an angle. The curvature of the groove at the shoulder reduces the contact impact of the lugs at the shoulder area as the lug enters the footprint, because of a transitional entering of the lug into the footprint, thereby further reducing the noise of the tire.

The curvature of the lateral grooves may be extended into the sidewall and the sidewall grooves may be angled to substantially match or complement the angle of the lateral grooves in the sidewall.

In order to keep the channels of the sidewall grooves open, if the tire is made having an annular sidewall design, e.g. a white sidewall, the sidewall may be segmented. In the illustrated embodiment, sidewall segments 42 have a parallelogram shape, having angled sides that substantially match the angles of the sidewall grooves. In the illustrated embodiment the tire has sixty-three (63) annular lugs in each rib and the sidewall has sixty-eight (68) segments. It will be recognized by those skilled in the art that it is not critical that the sidewall pattern exactly match the tread pattern but it is desirable that the sidewall pattern substantially continues the tread pattern.

It has been found that during vulcanization, venting of the tire of the invention is substantially improved over the venting in similar tires without the sidewall grooves. It is believed that the substantial alignment of the sidewall grooves with the shoulder grooves provides a pathway for gases vented from the sidewall to pass into the tread area where they are more easily removed from the mold.

While specific embodiments of the invention have been illustrated and described, it will be recognized by those skilled in the art that the invention may be variously modified and practiced without departing from the scope of the invention. The invention is limited only by the following claims.

## Claims

1. A pneumatic tire (10) comprising a pair of annular beads, carcass plies wrapped around said annular beads, a tread (11) disposed over said carcass plies in a crown area of said tire, and sidewalls (20) disposed between said tread (11) and said beads, said tread (11) having lateral grooves (14) extending through a shoulder area (16) of said tire (10), characterized in that the sidewall (20) has serrations (22) which are substantially in alignment with the lateral grooves (14) extending through said shoulder (16), providing thereby a continuous pathway for gases during vulcanization.

2. The pneumatic tire (10) of claim 1 wherein said sidewall (20) has substantially radial serration (22) originating in the vicinity of a maximum section width of said tire and terminating in the vicinity of said shoulder (16).

3. The pneumatic tire (10) of claim 1 wherein said sidewall has segments (42).

4. The pneumatic tire (10) of claim 3 wherein said segments (42) have a parallelogram shape having angled sides that substantially match the angles of the sidewall serrations (22).

5. The pneumatic tire (10) of claim 1 wherein said tread (11) is directional and has a net-to-gross ratio of 50% to 70% and at least one aqua channel (12) having a width of 10 to 22% of total treadwidth based on a tire footprint, and a depth of 78% to 100% of total tread depth, wherein the lateral grooves (14) comprise at least a portion of an S-shape having a leading end initiating within said aqua channel (12) and a trailing end (18) ending in a shoulder area (16) of said tire, wherein said S-shaped grooves intersect circumferential grooves (26) between said aqua channel (12) and said shoulder (16), intersections of circumferential grooves (26) and lateral grooves (14) defining lugs (28) and wherein a pattern created by said lateral grooves (14) is continued in said sidewall (20) in the form of substantially radial serrations (22) originating in the vicinity of a maximum cross section width of said tire and terminating in the vicinity of a shoulder (16).

6. The pneumatic tire (10) of claim 5 wherein said lateral grooves (14) comprise a full S-shape initiated in said aqua channel (12) and terminating in said shoulder (16) in the proximity of said sidewall (20).

## Patentansprüche

1. Luftreifen (10) umfassend ein Paar von ringförmigen Wulsten, Karkassenlagen, welche um die ringförmigen Wülste gewickelt sind, ein Profil (11), welches über den Karkassenlagen in einem Kronenbereich des Reifens angeordnet ist, und Seitenwände (20), welche zwischen dem Profil (11) und den Wülsten angeordnet sind, wobei das Profil (11) Lateralrillen (14) aufweist, welche sich durch einen Schulterbereich (16) des Reifens (10) erstrecken, dadurch gekennzeichnet, daß die Seitenwand (20) Kerben (22) aufweist, welche im wesentlichen mit den Lateralrillen (14) ausgerichtet sind, welche sich durch die Schulter (16) erstrecken, wodurch ein kontinuierlicher Durchgang für Gase während der Vulkanisierung bereitgestellt ist.

2. Luftreifen (10) nach Anspruch 1, wobei die Seitenwand (20) im wesentlichen eine radiale Kerbe (22) aufweist, welche in der Nähe einer maximalen Schnittbreite des Reifens beginnt und in der Nähe der Schulter (16) endet.

3. Luftreifen (10) nach Anspruch 1, wobei die Seitenwand Segmente (42) aufweist.

4. Luftreifen (10) nach Anspruch 3, wobei die Segmente (42) eine Parallelogrammform aufweisen mit gewinkelten Seiten, welche im wesentlichen mit den Winkeln der Seitenwandkerben (22) übereinstimmen.

5. Luftreifen (10) nach Anspruch 1, wobei das Profil (11) gerichtet ist und ein Netto-zu-Brutto-Verhältnis von 50% bis 70% aufweist und zumindest einen Wasserkanal (12) mit einer Breite von 10 bis 25% der Gesamtprofilbreite, basierend auf einem Reifenabdruck, und eine Tiefe von 78% bis 100% der Gesamtprofiltiefe hat, wobei die Lateralrillen (14) zumindest einen Abschnitt einer S-Form umfassen, mit einem vorderen Ende, welches in dem Wasserkanal (12) beginnt und einem hinteren Ende (18), welches in einem Schulterbereich (16) des Reifens endet, wobei die S-förmigen Rillen die umfänglichen Rillen (26) zwischen dem Wasserkanal (12) und der Schulter (16) schneiden, wobei die Schnitte der umfänglichen Rillen (26) und der Lateralrillen (14) Stollen (28) definieren, und wobei ein Muster, welches durch die Lateralrillen (14) erzeugt ist, in der Seitenwand (20) fortgeführt ist, und zwar in der Form von im wesentlichen radialen Kerben (22), welche in der Nähe einer maximalen Querschnittsbreite des Reifens beginnen und in der Nähe einer Schulter (16) enden.

6. Luftreifen (10) nach Anspruch 5, wobei die Lateralrillen (14) eine Gesamt-S-Form umfassen, beginnend in dem Wasserkanal 12 und endend in der Schulter (16) in der Nähe der Seitenwand (20).

## Revendications

1. Bandage pneumatique (10) comprenant une paire de talons annulaires, des nappes de carcasse enroulées autour desdits talons annulaires, une bande de roulement (11) disposée par-dessus lesdites nappes de carcasse dans une région de couronne dudit bandage pneumatique, ainsi que des flancs (20) disposés entre ladite bande de roulement (11) et lesdits talons, ladite bande de roulement (11) possédant des rainures latérales (14) s'étendant à travers une région d'épaulement (16) dudit bandage pneumatique (10), caractérisé en ce que le flanc (20) possède des dentelures (22) qui se trouvent essentiellement en alignement avec les rainures latérales (14) s'étendant à travers ledit épaulement (16), procurant ainsi une voie continue pour les gaz lors de la vulcanisation.

2. Bandage pneumatique (10) selon la revendication 1, dans lequel ledit flanc (20) possède une dentelure (22) essentiellement radiale prenant naissance à proximité de la largeur de section maximale dudit bandage pneumatique et se terminant à proximité dudit épaulement (16).

3. Bandage pneumatique (10) selon la revendication 1, dans lequel ledit flanc possède des segments (42).

4. Bandage pneumatique (10) selon la revendication 3, dans lequel lesdits segments (42) ont la forme d'un parallélogramme dont les côtés forment des angles qui correspondent essentiellement aux angles formés par les dentelures (22) pratiquées dans les flancs.

5. Bandage pneumatique (10) selon la revendication 1, dans lequel ladite bande de roulement (11) est directionnelle et possède un rapport net/brut de 50% à 70%, ainsi qu'au moins un canal (12) pour l'évacuation de l'eau, dont la largeur représente de 10 à 22% de la largeur de bande de roulement totale, basée sur l'empreinte du bandage pneumatique, ainsi qu'une profondeur représentant de 78% à 100% de la profondeur de bande de roulement totale, dans lequel les rainures latérales (14) comprennent au moins une portion d'une forme en "S" possédant une extrémité avant prenant naissance à l'intérieur dudit canal (12) pour l'évacuation de l'eau et une extrémité arrière (18) se terminant dans une région d'épaulement (16) dudit bandage pneumatique, dans lequel lesdites rainures en forme de "S" coupent des rainures circonférentielles (26) entre ledit canal (12) pour l'évacuation de l'eau et ledit épaulement (16), les intersections des rainures circonférentielles (26) et des rainures latérales (14) définissant des côtes (28), et dans lequel une sculpture créée par lesdites rainures latérales (14) se poursuit dans ledit flanc (20) sous la forme de dentelures (22) essentiellement radiales prenant naissance à proximité de la largeur maximale en coupe transversale dudit bandage pneumatique et se terminant à proximité de l'épaulement (16).

6. Bandage pneumatique (10) selon la revendication 5, dans lequel lesdites rainures latérales (14) comprennent une forme d'un "S" entier prenant naissance dans ledit canal (12) pour l'évacuation de l'eau et se terminant dans ledit épaulement (16) à proximité dudit flanc (20).
